Europäisches Patentamt

European Patent Office

Office européen des brevets

(11) Publication number: **0 101 183**

**B1**

(12) **EUROPEAN PATENT SPECIFICATION**

(45) Date of publication of patent specification: **18.03.87**

(51) Int. Cl.⁴: **C 01 B 33/28**

(21) Application number: **83304068.6**

(22) Date of filing: **13.07.83**

(54) Synthesis of ZSM-5 and ZSM-11 utilizing a mixture of quaternary ammonium ions and amines.

(30) Priority: **19.07.82 US 399575**

(43) Date of publication of application:
**22.02.84 Bulletin 84/08**

(45) Publication of the grant of the patent:
**18.03.87 Bulletin 87/12**

(84) Designated Contracting States:
**BE DE FR GB IT NL SE**

(56) References cited:
**EP-A-0 014 059**
**EP-A-0 023 089**
**EP-A-0 055 529**
**GB-A-1 365 318**
**US-A-4 108 881**
**US-A-4 139 600**
**US-A-4 151 189**
**US-A-4 205 053**
**US-A-4 287 166**

(73) Proprietor: **MOBIL OIL CORPORATION**
**150 East 42nd Street**
**New York New York 10017 (US)**

(72) Inventor: **Calvert, Robert Bruce**
**157 Hayward Mill Road**
**Concord Massachussets 01742 (US)**
Inventor: **Rollmann, Louis Deane**
**3 Dorann Avenue**
**Princeton New Jersey 08540 (US)**

(74) Representative: **Grundy, Derek George Ritchie**
**et al**
**CARPMAELS & RANSFORD 43, Bloomsbury**
**Square**
**London WC1A 2RA (GB)**

EP 0 101 183 B1

Courier Press, Leamington Spa, England.

# 0 101 183

**Description**

The present invention relates to a process for the preparation of ZSM-5 and ZSM-11 zeolites from reaction mixtures which contain both quaternary ammonium ions and amines. These two zeolites are defined by the x-ray diffraction data set forth in US—A—3,702,886 and 3,709,979 respectively.

Conventional synthesis of ZSM-5 and ZSM-11 has employed quaternary Group VA cations as the sole nitrogen-containing material in the forming solutions, notably tetrapropylammonium, tetrabutylammonium and tetrabutylphosphonium. Recently there have been improvements in the synthesis of both ZSM-5 and ZSM-11 wherein quaternary ammonium ions are omitted from the forming solution and replaced by amines. Thus, for example, US—A—4,151,189 discloses synthesis of various zeolites, including ZSM-5, wherein the quanternary ammonium ion conventionally used is replaced by a primary amine, particularly one having from two to nine carbon atoms. US—A—4,139,600 discloses synthesis of ZSM-5 wherein quaternary ammonium ions are replaced by various diamines, such as pentane diamine and hexane diamine. US—A—4,108,881 discloses a process for the preparation of ZSM-11 wherein the quaternary ammonium ions conventionally present in the forming solution are replaced by one or more alkylene diamines. US—A—4,205,053 discloses addition of an amine to a forming solution already containing a quaternary ammonium compound to yield a zeolite having a microscopic texture different from what would have been obtained in the absence of the amine.

It has now been discovered that significant advantages can be obtained in the synthesis of ZSM-5 and ZSM-11 if a portion of the quaternary ammonium cations conventionally used in their synthesis are replaced with the less expensive amines and in particular with low molecular weight amines.

According to the present invention, therefore, a process of manufacturing zeolite ZSM-5 or zeolite ZSM-11 from an aqueous forming solution comprising a source of silica and a nitrogenous template is characterised in that as said nitrogenous template both a quaternary ammonium compound and an amine are employed, the molar ratio of quaternary ammonium compound to silica being from 0.001 to 0.04, the molar ratio of amine to silica from 0.02 to 0.18 and the molar ratio of both the quaternary ammonium compound and the amine to silica from 0.02 to 0.22.

The forming solution may also contain a source of alumina. The preferred quaternary ammonium compounds are tetrapropylammonium, tetrabutylammonium and tetrabutylphosphonium. The preferred amines have the formula $R_1R_2R_3N$ wherein $R_1$ and $R_2$ are hydrogen or lower alkyl of from 2—8 carbon atoms, and $R_3$ is lower alkyl of from 2—8 carbon atoms, typified by n-butylamine, tripropylamine, ethylamine, n-propylamine, i-propylamine, diethylamine, di-n-propylamine, di-i-propylamine, di-n-butylamine, triethylamine, tripropylamine, and tributylamine.

For reasons which are not fully understood, it has been found that there is a synergism which exists in the use of both quaternary ammonium compounds and amines, at certain concentrations, in the synthesis of ZSM-5 and ZSM-11 in that products having excellent crystallinity are obtained in a comparatively short period of time. The present inventive concept is in no way concerned with altering the microscopic texture of a zeolite nor is it concerned with operating at the high levels of quaternary ammonium compound used in the process of US—A—4,205,053.

The synergism which exists between amine and quaternary ammonium compound with regard to enhancing the crystallisation rates does not manifest itself over all ranges of concentration of amine and quaternary to silica, but only over a very narrow and critical range. Thus, a quaternary ammonium cation has the ability to cause the crystallisation of ZSM-5 and ZSM-11 type zeolites by itself, if used in a sufficient amount, and the addition of an amine can in no way effect the rate of crystallisation if sufficient quaternary ammonium compound is already present. Similarly, amines, if used in sufficient quantity, also provide acceptable rates of crystallisation by themselves and if used in such quantities the addition of a quaternary ammonium cation will not result in any synergism. In the process of this invention, therefore, neither the quaternary compound nor the amine is present in sufficient quantity alone to bring about an acceptable rate of crystallisation of product zeolite.

The process of this invention, therefore, involves the preparation of ZSM-5 and ZSM-11 type zeolites from reaction mixtures containing both quaternary ammonium ions and amines together with the usual constituents present in the synthesis of zeolitic materials, i.e. silica, water, alkali metal cations and optionally alumina, and is operable over a range of molar ratio of quaternary ammonium compound to silica of from 0.001 to 0.04. Above this range, the quaternary ammonium compound alone is effective to give rapid rates of crystallisation while below this range the quaternary ammonium content appears to become rate limiting. The amount of tetraalkylammonium ion plus amine (hereinafter referred to as total organic) utilised in the process is that amount which will provide a total organic to silica molar ratio of from about 0.02 to 0.22. Obviously the difference between the total organic to silica ratio and the quaternary ammonium to silica ratio is the amount of amine utilised and it ranges from 0.02 to 0.18 moles amine per mole of silica.

The quaternary ammonium ion compounds useful in the novel process of this invention are those customarily used in the synthesis of ZSM-5 or ZSM-11 and include tetraalkylammonium compounds, the alkyl group of which contains 2—5 carbon atoms such as for example tetrapropylammonium, tetraethylammonium, tetrabutylammonium and tetrabutylphosphonium compounds. Amines which are operable in the novel process of this invention include both primary, secondary, tertiary, and cyclic amines.

2

The preferred amines represented by the formula $R_1R_2R_3N$ wherein $R_1$ and $R_2$ represent hydrogen and lower alkyl groups of from 2—8 carbon atoms and $R_3$ represents alkyl groups of from 2—8 carbon atoms. Alkylene diamines are also useable, especially polymethylene diamines having from 7—12 carbon atoms. The forming solution can also contain a source of deliberately added alumina which can be conveniently supplied as sodium aluminate or aluminium sulfate. It is to be understood, however, that no alumina need be deliberately added to the forming solution and that the silica-to-alumina ratio of the zeolites which are synthesised may in consequence range virtually to infinity. Preferred silica-to-alumina ratios are from 20 to 2000.

The following examples will now illustrate the novel process of carrying out this invention.

Example 1

This example demonstrates that the use of tetrapropylammonium ion at low levels affects the rate of crystallisation.

Into a stirred autoclave was added Q-brand sodium silicate (28.9 wt% $SiO_2$, 8.9 wt.% $Na_2O$, 62.2 wt.% $H_2O$), hydrated aluminium sulfate, water, and tetrapropylammonium bromide (TPABr). The reaction mixture had the following composition, expressed as mol ratios.

| | |
|---|---|
| $SiO_2/Al_2O_3$ | 90 |
| $H_2O/SiO_2$ | 20 |
| $OH^-/SiO_2$ | 0.1 |
| $Na^+/SiO_2$ | 0.6 |
| $TPA/SiO_2$ | 0.005 |

Crystallisation was carried out at 160°C in a helium atmosphere (300 psi) for six hours. The product obtained was ZSM-5 having an x-ray crystallinity of only 40% when compared with a known standard.

A $TPA/SiO_2$ molar ratio of 0.005 is thus too low to obtain a satisfactory rate of crystallisation.

Example 2

The procedure of Example 1 was repeated with the sole exception that the tetrapropylammonium bromide was omitted and replaced with i-propylamine.

The reaction mixture had the following composition expressed as mol ratios:

| | |
|---|---|
| $SiO_2/Al_2O_3$ | 90 |
| $H_2O/SiO_2$ | 20 |
| $OH^-/SiO_2$ | 0.1 |
| $Na^+/SiO_2$ | 0.6 |
| $Amines/SiO_2$ | 0.045 |

Crystallisation was carried out in the identical manner as Example 1 and after six hours a product was obtained which had 0% crystallinity.

Thus, the use of 0.045 mols of amine per mol of silica did not bring about crystallisation of ZSM-5 within the time period stated.

Example 3

The procedure of Example 2 was repeated with both tetrapropylammonium bromide and isopropylamine being employed. The reaction composition was identical to that set forth in Example 1 with the exception that the molar ratio of TPA to $SiO_2$ was 0.0075 and the molar ratio of amine to $SiO_2$ was 0.042 giving a total organics to $SiO_2$ molar ratio of 0.05.

Crystallisation was carried out as previously described and after six hours a ZSM-5 was obtained having a crystallinity of 80%.

The procedure of this example clearly demonstrates an increased rate of crystallisation relative to the previous.

Examples 4—14

N-butylamine was utilised in place of isopropylamine. The following table lists the results obtained in carrying out crystallisation at 160°C for six hours as well as the molar ratio of the various reactants employed.

3

# 0 101 183

## TABLE 1

| Example | $SiO_2/Al_2O_3$ | $H_2O/SiO_2$ | $OH^-/SiO_2$ | $Na^+/SiO_2$ | $TPA/SiO_2$ | $Amine/SiO_2$ | Product ZSM-5 crystallinity |
|---------|------------------|---------------|---------------|---------------|--------------|----------------|------------------------------|
| 4 | 90 | 20 | .1 | .6 | .005 | 0 | 40% |
| 5 | 90 | 20 | .1 | .6 | .1 | 0 | 90% |
| 6 | 90 | 20 | .1 | .6 | .008 | .045 | 95% |
| 7 | 90 | 20 | .1 | .6 | .005 | .045 | 85% |
| 8 | 90 | 20 | .1 | .6 | .003 | .045 | 80% |
| 9 | 90 | 20 | .1 | .6 | .0024 | .045 | 95% |
| 10 | 90 | 20 | .1 | .6 | .001 | .045 | 55% |
| 11 | 90 | 20 | .1 | .6 | .0092 | .0191 | 95% |
| 12 | 90 | 20 | .1 | .6 | .0046 | .095 | 95% |
| 13 | 90 | 20 | .1 | .6 | .0024 | .045 | 95% |
| 14 | 90 | 20 | .1 | .6 | .0012 | .024 | 50% |

Example 4 is the same as Example 1 and is included in Table 1 for comparative purposes. Example 5 increased the TPA to $SiO_2$ ratio to 0.1 and as can be seen at this high level the TPA alone was sufficient to give very acceptable rates of crystallisation. Example 10, which had a $TPA/SiO_2$ of 0.001, i.e. the lower limit of this invention, resulted in a marginal crystallisation rate. The same comment applies to Example 14.

Examples 15—28

The procedure of Examples 4—14 was repeated with the exception that the amine employed was tripropylamine, as opposed to n-butylamine. All experiments were carried out in the manner previously set forth and the various mol ratios of reactants, as well as the results obtained, are shown in the following table.

4

TABLE 2
Tripropylamine/TPA runs

| Example | TPA/SiO$_2$ | Pr$_3$N/SiO$_2$ | Time (hrs.) | ZSM-5 crystallinity (%) |
|---------|-------------|-----------------|-------------|--------------------------|
| 15 | 0.1 | — | 20 | 92 |
| 16 | 0.1 | — | 20 | 94 |
| 17 | 0.09 | 0.02 | 20 | 100 |
| 18 | 0.09 | 0.02 | 20 | 100 |
| 19 | 0.05 | 0.1 | 20 | 99 |
| 20 | 0.05 | 0.1 | 20 | 100 |
| 21 | 0.01 | 0.17 | 20 | 100 |
| 22 | 0.01 | 0.17 | 20 | 98 |
| 23 | — | 0.2 | 20 | 100 |
| 24 | — | 0.2 | 20 | 100 |
| 25 | 0.1 | — | 8 | 90 |
| 26 | 0.1 | — | 6 | 87 |
| 27 | — | 0.2 | 7 | 100 |
| 28 | 0.09 | 0.02 | 7 | 99 |

In each of these experiments the silica-to-alumina molar ratio was 90 and the H$_2$O/SiO$_2$ ratio was 20 and the OH$^-$/SiO$_2$ ratio was 0.1 and the Na$^+$/SiO$_2$ ratio was 0.6.

As can be seen from the above table, Examples 15 and 16 are, in essence, very similar to Examples 4 and 5 with the exception that the crystallisation time was 20 hours as opposed to six hours. As is obvious, these high ratios of TPA/SiO$_2$ resulted in very acceptable crystallinity. Examples 17, 18, 19, 20, 25, 26 and 28 also have TPA/SiO$_2$ ratios sufficient in and of themselves to give rapid rates of crystallisation. Examples 23, 24 and 27 are amine-alone experiments and, as can be seen, this amount of amine was sufficient to give acceptable crystallinity rates. Examples 21 and 22 exhibit synergism.

Example 29

The following examples will further demonstrate the synergism between amine and quaternary ammonium compound when operating at the concentration ranges of this invention. The procedure of Example 4 was repeated with the exception that no tetrapropylammonium ion was employed amd the sole organic was n-butylamine used in an amount of an amine to silica ratio of 0.1. The result obtained after six hours of crystallisation as well as a comparison with Examples 4 and 9 is set forth in the following table.

TABLE 3

| Example | 29 | 4 | 9 |
|---------|-----|-----|------|
| SiO$_2$/Al$_2$O$_3$ | 90 | 90 | 90 |
| H$_2$O/SiO$_2$ | 20 | 20 | 20 |
| OH$^-$/SiO$_2$ | .1 | .1 | .1 |
| Na$^+$/SiO$_2$ | .6 | .6 | .6 |
| TPA/SiO$_2$ | 0 | .005 | .0024 |
| Amine/SiO$_2$ | .1 | 0 | .045 |
| Product ZSM-5 crystallinity | 25% | 40% | 95% |

5

**0 101 183**

Thus, Example 29 demonstrates that at an amine only level of 0.1 mol per mol of silica, a product was obtained in six hours that had only a 25% crystallinity. Example 4 shows that the use of TPA-silica ratio of 0.005 resulted in a product which had a crystallinity of only 40% after six hours. However, Example 9 which used both a mixture of tetrapropylammonium and amine had a 95% crystallinity at the end of six hours, thereby conclusively demonstrating an enhanced reaction rate. It is interesting that the total organics in Example 29 was 0.1, the total organic in Example 4 was 0.05, whereas the total organic in Example 9 was 0.0474. Also note that roughly half the tetrapropylammonium was used in Example 9 as was used in Example 4 and less than half the amount of amine was used in Example 9 as used in Example 29 and yet the rate of crystallisation was dramatically enhanced.

Examples 30—39

The utility of other amines in combination was trace amounts of TPA ion has been investigated and the results are shown in the table below. With only minor exception, those amines which were particularly effective in the absence of TPA ($nPr_2NH$, $nPr_3N$, $nBuNH_2$, $nBu_2NH$, $nBu_3N$) were also most effective in conjunction with small quantities of TPA ion. In addition, $i-Pr_2NH$, a marginal performer alone, joins the list in the presence of TPA.

These experiments were conducted in the identical manner as previously described in connection with Examples 4—14, i.e. 160°C, stirred for six hours, silica-to-alumina ratio of 90 and $H_2O/SiO_2$ ratio of 20, an $OH^-/SiO_2$ ratio of 0.1, a $Na^+/SiO_2$ ratio of 0.6.

The various amines used as well as the $TPA/SiO_2$ and $Amine/SiO_2$ ratios and the results obtained are shown in the following table together with a comparison with previously presented Examples 26, 4 and 6.

TABLE 4
Amine+TPA experiments
(160°C, stirred, 6 hours, 90/20/0.1/0.6/varied)

| Example | Amine | $\frac{TPA}{SiO_2}$ | $\frac{Amine}{SiO_2}$ | ZSM-5 Crystallinity (%) |
|---|---|---|---|---|
| 26 | — | 0.1 | — | 87 |
| 4 | — | 0.005 | — | 40 |
| 30 | Ethylamine | 0.01 | 0.045 | 76 |
| 31 | n-propylamine | 0.01 | 0.045 | 77 |
| 32 | i-propylamine | 0.01 | 0.045 | 79 |
| 6 | n-butylamine | 0.01 | 0.045 | 95 |
| 33 | Diethylamine | 0.01 | 0.045 | 78 |
| 34 | di-n-propylamine | 0.01 | 0.045 | 90 |
| 35 | di-i-propylamine | 0.01 | 0.045 | 91 |
| 36 | di-n-butylamine | 0.01 | 0.045 | 93 |
| 37 | Triethylamine | 0.01 | 0.045 | 83 |
| 38 | Tripropylamine | 0.01 | 0.045 | 97 |
| 39 | Tributylamine | 0.01 | 0.045 | 81 |

**Claims**

1. A process of manufacturing zeolite ZSM-5 or zeolite ZSM-11 from an aqueous forming solution comprising a source of silica and a nitrogenous template characterised in that as said nitrogenous template both a quaternary ammonium compound and an amine are employed, the molar ratio of quaternary ammonium compound to silica being from 0.001 to 0.04, the molar ratio of amine to silica from 0.02 to 0.18 and the molar ratio of both the quaternary ammonium compound and the amine to silica from 0.02 to 0.22.

2. A process according to claim 1 wherein the forming solution also contains a source of alumina.

3. A process according to claim 1 or claim 2 wherein the quaternary ammonium compound is a tetrapropylammonium, tetrabutylammonium or tetrabutylphosphonium compound.

4. A process according to any preceding claim wherein the amine has the formula $R_1R_2R_3N$ wherein $R_1$

6

**0 101 183**

and $R_2$ are hydrogen or lower alkyl or from 2—8 carbon atoms and $R_3$ is lower alkyl of from 2—8 carbon atoms.

5. A process according to any preceding claim where the amine is n-butylamine, tripropylamine, ethylamine, n-propylamine, i-propylamine, diethylamine, di-n-propylamine, di-i-propylamine, di-n-butylamine, triethylamine, tripropylamine, or tributylamine.

**Patentansprüche**

1. Verfahren zur Herstellung von Zeolith ZSM-5 oder Zeolith ZSM-11 aus einer wässrigen Bildungslösung, die eine Quelle von Siliciumdioxid und von einem stickstoffhaltigen Template umfaßt, dadurch gekennzeichnet, daß als stickstoffhaltiges Template sowohl eine quaternäre Ammoniumverbindung als auch ein Amin eingesetzt werden, wobei das Molverhältnis der quaternären Ammoniumverbindung zum Siliciumdioxid von 0,001 bis 0,04, das Molverhältnis des Amins zum Siliciumdioxid von 0,02 bis 0,18 und das Molverhältnis sowohl der quaternären Ammoniumverbindung als auch des Amins zum Siliciumdioxid von 0,02 bis 0,22 betragen.

2. Verfahren nach Anspruch 1, worin die Bildungslösung ebenfalls eine Aluminiumoxidquelle enthält.

3. Verfahren nach Anspruch 1 oder 2, worin die quaternäre Ammoniumverbindung eine Tetrapropylammonium-, Tetrabutylammonium- oder Tetrabutylphosphonium-Verbindung ist.

4. Verfahren nach einem der vorstehenden Ansprüche, worin das Amin die Formel $R_1R_2R_3N$ hat, worin $R_1$ und $R_2$ Wasserstoff oder ein niederes Alkyl von 2—8 Kohlenstoffatomen sind und $R_3$ ein niederes Alkyl von 2—8 Kohlenstoffatomen ist.

5. Verfahren nach einem der vorstehenden Ansprüche, worin das Amin n-Butylamin, Tripropylamin, Ethylamin, n-Propylamin, i-Propylamin, Diethylamin, Di-n-propylamin, Di-i-propylamin, Di-n-butylamin, Triethylamin, Tripropylamin oder Tributylamin ist.

**Revendications**

1. Procédé de préparation d'une zéolite ZSM-5 ou d'une zéolite ZSM-11 à partir d'une solution mère aqueuse comprenant une source de silice et un composé azoté, caractérisé en ce que ledit composé azoté contient à la fois un composé d'ammonium quaternaire et une amine, le rapport molaire du composé ammonium quaternaire à la silice étant compris entre 0,001 et 0,04, le rapport molaire de l'amine à la silice étant de 0,02 à 0,18 et le rapport molaire des composés ammonium quaternaire plus amine sur silice étant compris entre 0,02 et 0,22.

2. Un procédé selon la revendication 1, dans lequel la solution mère contient également une source d'alumine.

3. Un procédé selon la revendication 1 ou la revendication 2, dans lequel le composé d'ammonium quaternaire est un composé de tétrapropylammonium, tétrabutylammonium et tétrabutylphosphonium.

4. Un procédé selon l'une quelconque des revendications précédentes, dans lequel l'amine présente la formule $R_1R_2R_3N$ dans laquelle $R_1$ et $R_2$ représentent un atome d'hydrogène ou un alkyle inférieur comportant de 2 à 8 atomes de carbone, et $R_3$ représente un groupement alkyle inférieur comportant de 2 à 8 atomes de carbone.

5. Un procédé selon l'une quelconque des revendications précédentes, dans lequel l'amine représente la n-butylamine, la tripropylamine, l'éthylamine, la n-propylamine, l'isopropylamine, la diéthylamine, la di-n-propylamine, la di-isopropylamine, la di-n-butylamine, la triéthylamine, la tripropylamine ou la tributylamine.